# EUROPÄISCHE PATENTSCHRIFT

(11) **EP 0 989 901 B1**
(45) Veröffentlichungstag und Bekanntmachung des Hinweises auf die Patenterteilung: **02.03.2005**
(21) Anmeldenummer: 98936146.4
(22) Anmeldetag: 12.06.1998
(51) Int. Cl.: B01D 53/32, B03C 3/38, F24F 3/16, A61L 9/22

(54) **IONISATIONSFILTER ZUR REINIGUNG VON LUFT**
IONISATION FILTER FOR PURIFYING AIR
FILTRE D'IONISATION POUR EPURATION D'AIR

(30) Priorität: 13.06.1997 DE 19725030; 14.07.1997 DE 19730040; 28.07.1997 DE 19732335; 14.08.1997 DE 19735192; 26.11.1997 DE 19752393; 20.12.1997 DE 19756999; 04.03.1998 DE 19809068; 05.05.1998 DE 19819939; 12.05.1998 DE 19821184
(43) Veröffentlichungstag der Anmeldung: 05.04.2000
(73) Patentinhaber: Hölter, Heinz, Prof. Dr. Sc., Dr.-Ing., D-45964 Gladbeck (DE)
(72) Erfinder: Hölter, Heinz, Prof. Dr. Sc., Dr.-Ing., D-45964 Gladbeck (DE)
(86) Internationale Anmeldenummer: PCT/DE1998/001599
(87) Internationale Veröffentlichungsnummer: WO 1998/056489

(56) Entgegenhaltungen:
- EP-A- 0 403 230
- DE-A- 3 703 137
- DE-A- 4 028 531
- US-A- 4 956 152

## Beschreibung

Die Erfindung betrifft ein Ionisationsfilter zur Reinigung von mit Staubpartikeln und sonstigen organischen und anorganischen Schadstoffen angereicherter Luft mit mindestens einer elektrisch aufgeladenen Sprühelektrode zur Erzeugung elektrisch leitender Teilchen und mindestens einer Niederschlagselektrode zum Auffangen der im elektrischen Feld zwischen Sprühelektrode und Niederschlagselektrode bewegten Schadstoffteilchen.

Derartige Ionisationsfilter, die bisher insbesondere zur Abscheidung von Staub aus den Rauchgasen fossil beheizter Kraftwerke eingesetzt werden, zeichnen sich bei hohem Staubabscheidegrad durch einen niedrigen Strömungswiderstand für das die Elektroden passierende zu reinigende Rauchgas aus. Darüber hinaus sind aufgrund der sehr einfachen Bauweise ohne bewegte Teile derartige Elektrofilter sehr verschleißarm und damit nur in geringem Maße reparaturanfällig.

EP-A-0 403 230 und US-A-4956152 beschreiben Ionisationsfilter die eine Sprühelektrode, eine Niederschlagselektrode und eine weiteren Schicht enthalten.

Im Bereich von Gebäuden, wie Wohnhäusern, Krankenhäusern, öffentliche Verwaltungen usw., erfolgt z. B. im Kreislauf von Klimaanlagen die Reinigung der Luft meist mittels normalen Filtern, die aus fliesartigen Materialien in der Regel aufgebaut sind. Diese Filter weisen einen sehr hohen Druckverlust auf, wobei mit zunehmender Beladung die Reinigungswirkung zudem nachläßt. Bakterien, Pilze, Sporen oder andere Mikroorganismen passieren das Filter oder werden aufgrund des durch die Beladung bedingten erhöhten Ventilatordruckes über Undichtigkeiten im Leitungssystem freigesetzt und können zu einer starken gesundheitlichen Belastung der mit Frischluft zu versorgenden Menschen führen.

Der Erfindung liegt die Aufgabe zugrunde, ein Filtersystem, insbesondere für Gebäude, zu entwickeln, welches bei niedrigem Druckverlust einen hohen Reinigungswirkungsgrad auch gegenüber gesundheitsgefährdeten Mikroorganismen aufweist.

Diese Aufgabe wird gemäß der Erfindung bei einem lonisationsfilter der eingangs genannten Art durch eine im Strömungsweg der abzuscheidenden Schadstoffteilchen angeordnete weitere Schicht, welche denaturierende Eigenschaften aufweist, gelöst.

Unter denaturierender Schicht wird im Sinne der Erfindung ein Material verstanden, welches eine freie Stoffaustauschfläche für Mikororganismen aufweist, die derart präpariert ist, daß die kontaktierten Mikroorganismen nach kurzer Zeit absterben. Als denaturierend wirkende Stoffe können entsprechende Kupferverbindungen oder auch sonstige bekannte toxische Materialien, mit denen die entsprechende Schicht imprägniert oder präpariert worden ist, eingesetzt werden.

Durch die Erfindung ist somit gewährleistet, daß nicht nur die üblichen Staubpartikel und sonstigen Mikoorganismen an der Niederschlagselektrode des Ionisationsfilters abgeschieden werden, sondern daß darüber hinaus durch die eingesetzte denaturierende Schicht die Abtötung der Mikroorganismen gleichzeitig erfolgt.

Nach einem weiteren Merkmal der Erfindung erweist es sich als besonders vorteilhaft, als denaturierende Schicht ein Material einzusetzen, weiches entweder stark sauer oder stark alkalisch ausgebildet oder entsprechend vorbehandelt ist. Unter stark sauer wird dabei ein ph-Wert zwischen 1 und 3 und unter stark alkalisch ein ph-Wert zwischen 11 und 14 verstanden.
Es hat sich gezeigt, daß in einem derartigen extremen Milieu ebenfalls nahezu die Gesamtheit der Mikroorganismen abstirbt.

Besonders wirkungsvoll erweist es sich dabei, wenn die denaturierende Schicht mehrlagig ausgebildet ist mit abwechselnd stark sauer bzw. stark alkalisch oder umgekehrt ausgebildeten Lagen, wobei jeweils eine neutrale Zwischenlage zwischen zwei Lagen mit unterschiedlichen ph-Werten vorgesehen ist. Durch diesen zusätzlichen Wechsel in den extremen Milieubedingungen wird eine besonders hohe Sterberate der Mikroorganismen erreicht. Die Einstellung der stark saueren oder stark alkalischen Milieubedingungen kann durch Präparierung mit entsprechenden Salzen bzw. Laugen erfolgen.

Zweckmäßigerweise ist die denaturierende Schicht direkt vor der Oberfläche der Niederschlagselektrode angeordnet bzw. die Oberfläche der Niederschlagselektrode kann auch zusätzlich denaturierend ausgebildet sein.

Sofern das denaturierend ausgebildete Material elektrisch leitend ist oder beispielsweise durch Einbindung entsprechender Materialien, wie z. B. Drahtgeflechte oder -gitter elektrisch leitend gemacht wird, kann die denaturierende Schicht selbst auch direkt als Niederschlagselektrode eingesetzt werden.

Bei Ionisationsfiltern mit einem Metalldraht als Sprühelektrode erweist es sich zur Erhöhung des Wirkungsgrades dabei als sehr zweckmäßig, die drahtförmige Sprühelektrode zusätzlich mit über deren Länge verteilten Feinstdrahtspitzen zu besetzen. Am Ende derartiger Feinstdrahtspitzen, die zweckmäßigerweise in einem Winkelbereich zwischen 60° und 90° an der Sprühelektrode angeordnet sind, bilden sich bekanntlich sehr starke elektrische Felder, die eine entsprechend intensive Ionisierung der vorbeiströmenden Partikel bewirken. Dies wiederum führt zu einer hohen Abscheiderate auf der entgegengesetz geladenen Niederschlagselektrode.

In kleineren Klimaanlagen, wie z. B. in Wohngebäuden oder insbesondere auch bei Kraftfahrzeugen, ist die Sprühelektrode des Ionisationsfilters als Metalldraht ausgebildet und zentral in einem elektrisch leitenden Rohrkanalstück angeordnet, wobei die denaturierende Schicht auf der inneren Oberfläche des die Sprühelektrode umgebenden Strömungskanals vorgesehen ist. Derartige Filter können in einfacher Weise in vorhandene Strömungswege eingeflanscht werden und bei entsprechender Beladung ohne weiteres herausgenommen und durch andere Einheiten ersetzt werden.

Beim Betrieb des Ionisationsfilters kann es sich als zweckmäßig erweisen, die elektrische Spannung zwischen Sprühelektrode und Niederschlagselektrode auf einen Wert oberhalb 5000 V (vorzugsweise oberhalb 7000 V) einzustellen. Bei einer derart hohen Spannung bildet sich in der Regel Ozon, welches zusätzlich dazu beiträgt Mikroorganismen abzutöten.

Die beladenen Ionisationsfilter gemäß der Erfindung lassen sich besonders leicht, thermisch entsorgen, wenn nach einem weiteren Merkmal der Erfindung die Niederschlagselektrode aus einem thermisch verwertbaren organischen Grundmaterial besteht, welches mit einem elektrisch leitenden organischen Material armiert ist.
Das organische Grundmaterial, das zweckmäßigerweise Säure und/oder alkalisch unempfindlich ist, kann ausgesteiftes Papier, Katonnage, Kunststoff-Flies oder dergleiches sein. Als elektrisch leitendes Material zur Armierung wird zweckmäßigerweise Graphit verwendet.

Falls die denaturierende Schicht aus abwechselnden Lagen mit unterschiedlichen ph-Werten aufgebaut ist und gleichzeitig als Niederschlagselektrode verwendbar sein soll, können nach einem weiteren Merkmal der Erfindung auch alle verwendeten Lagen mit Graphit armiert und somit entsprechend elektrisch leitfähig gemacht werden.

Insbesondere bei lonisationsfiltem, die zur Reinigung größerer Luftmengen eingesetzt werden, kann eine weitere Optimierung dadurch erfolgen, daß die Niederschlagselektrode auf jeder einer Sprühelektrode zugeordneten Seite mit einer Gitterstruktur versehen ist, wobei jede Gitterfläche mit hintereinander angeordneten saueren, neutralen und alkalisch ausgebildeten Schichten, vorzugsweise Filzschichten, bedeckt ist und wobei abwechselnd eine sauere oder eine alkalische Schicht, die der Sprühelektrode zugeordnete Oberfläche bildet. Durch eine derartige facettenartige Ausgestaltung der denaturierenden Schicht ähnlich einem Schachbrett ist gewährleistet, daß Mikroorganismen sowohl beim Passieren der Schicht parallel zur Oberfläche als auch beim Durchströmen der Schicht senkrecht zur Oberfläche ständig sich ändernden Milieubedingungen, die ein schnelles Absterben bewirken, ausgesetzt sind.

Die vorgesehende Gitterstruktur selbst kann beliebig, vorzugsweise aber rechteckig, quadratisch oder auch sechseckig in Form einer Bienenwabe ausgebildet sein.

Zur weiteren Optimierung der Abscheideleistung des Ionisationsfilters kann es sich zudem als zweckmäßig erweisen, mehrere denaturierend ausgebildete Niederschlagselektroden zueinander in Reihen anzuordnen. Dadurch können die die Hauptniederschlagselektrode noch passierenden Teilchen in eine dieser nachgeschalteten Zusatzniederschlagselektrode abgeschieden werden. Dieser Abscheideeffekt kann zusätzlich noch verstärkt werden, wenn nach einem weiteren Merkmal an der Sprühelektrode gezielt ein im Hinblick auf die Aufnahmefähigkeit der Hauptniederschlagselektrode bezogende Ionenüberschuß erzeugt wird.

Da in der Regel die zu reinigende Luft nicht mit konstanter Feuchtigkeit anfällt, erweist es sich nach einem weiteren Merkmal der Erfindung als zweckmäßig, die denaturierenden Schichten zusätzlich mit hygroskopischen Substanzen, wie z. B. Kali- und/oder Natriumsalzen, zu imprägnieren. Die hygroskopischen Substanzen binden Feuchtigkeit aus der Luft und gewährleisten somit, daß innerhalb der denaturierenden Schicht immer die zur Aufrechterhaltung der stark saueren und/oder stark alkalischen Eigenschaften erforderliche Feuchte gewährleistet ist.

Nach einem weiteren Merkmal der Erfindung kann die denaturierende Schicht zusätzlich noch mit poly- und/oder monoklonalen Antikörpern imprägniert oder getränkt werden. Derartige Antikörper bewirken, daß insbesondere Allergene in einem noch höheren Maße abgeschieden und denaturiert werden, als dies bei lediglich sauerer und/oder alkalischer Ausstattung gegeben ist. Das Einbringen der Antikörper kann entweder durch Imprägnieren der Lagen der denaturierenden Schicht direkt oder auch durch Anordnung einer zusätzlichen mit den Antikörpern imprägnierten Schicht bzw. Lage erfolgen.
Auch ist es möglich, die denaturierende Schicht ggfs. zusätzlich mit Wirkstoffen gegen die Bildung von Endotoxinen, das sind bekanntlich die beim Zerfall von Bakterien entstehenden Gifte, zu imprägnieren, bzw. weitere Imprägniermittel gegen Pilzbefall vorzusehen.

Zur Erhöhung des Abscheidegrades des Ionisationsfilters kann es sich nach einem weiteren Merkmal der Erfindung als zweckmäßig erweisen, der zu reinigenden Luft vor dem Passieren der Sprühelektrode ein feinzerstäubtes Aerosol zuzuführen. Die feinen Aerosoltröpfchen werden im Bereich der Sprühelektrode ebenfalls ionisiert und in Richtung Niederschlagselektrode bewegt. Aufgrund der nunmehr erhöhten Ionendichte innerhalb des Ionisationsfilters steht für Kleinstteilchen eine vergrößerte Stoffanlagerungsfläche, wodurch auch derartige Teilchen in größerem Maße nunmehr zur Niederschlagselektrode transportiert werden. Zweckmäßigerweise wird das Aerosol in einem Ultraschallzerstäuber, der sich durch eine besonders feine Zerstäubung auszeichnet, erzeugt.

Falls erforderlich, kann zur Abscheidung weiterer Schadstoffe oder auch zur weiteren Erhöhung des Abscheidewirkungsgrades in die denaturierende Schicht direkt oder in Form einer zusätzlichen Lage zusätzlich Aktivkohle integriert sein.

## Patentansprüche

1. Ionisationsfilter zur Reinigung von mit Staubpartikeln und sonstigen anorganischen und organischen Schadstoffen angereicherter Luft mit mindestens einer elektrisch aufgeladenen Sprühelektrode zur Erzeugung elektrisch leitender Teilchen und mindestens einer Niederschlagselektrode zum Auffangen der im elektrischen Feld zwischen Sprühelektrode und Niederschlagselektrode bewegten Schadstoffteilchen, **gekennzeichnet durch** eine im Strömungsweg der abzuscheidenden Schadstoffteilchen angeordnete weitere denaturierende Schicht, welche eine freie Stoffaustauschfläche für Mikroorganismen aufweist, auf der die kontaktierten Mikroorganismen absterben.

2. Ionisationsfilter nach Anspruch 1, **dadurch gekennzeichnet, dass** die denaturierende Schicht stark sauer oder stark alkalisch ausgebildet ist.

3. lonisationsfilter nach Anspruch 1 oder Anspruch 2, **dadurch gekennzeichnet, dass** die denaturierende Schicht mehrlagig aufgebaut ist mit abwechselnd stark sauer bzw. stark alkalisch oder umgekehrt ausgebildeten Lagen und jeweils einer neutralen Zwischenlage zwischen zwei Lagen mit unterschiedlichen pH-Werten.

4. Ionisationsfilter nach einem der Ansprüche 1 bis 3, **dadurch gekennzeichnet, dass** die denaturierende Schicht mit der Oberfläche der Niederschlagselektrode verbunden ist

5. Ionisationsfilter nach einem der Ansprüche 1 bis 4, **dadurch gekennzeichnet, dass** die denaturierende Schicht in die Oberfläche der Niederschlagselektrode bzw. in die gesamte Niederschlagselektrode integriert ist

6. lonisationsfilter nach einem der Ansprüche 1 bis 5, **dadurch gekennzeichnet, dass** die Sprühelektrode ein Metalldraht ist, weicher Über seine Länge verteilt mit Feindrahtspitzen besetzt ist.

7. Ionisationsfilter nach Anspruch 6, **dadurch gekennzeichnet, dass** die Feindrahtspitzen in einem Winkelbereich von 60" bis 90" zur Drahtachse an diesem befestigt sind.

8. lonisationsfilter nach einem der Ansprüche 6 oder 7, **dadurch gekennzeichnet**,-dass-die Niederschlagselektrode rohrförmig ausgebildet und die denaturierende Schicht auf der der Sprühelektrode zugekehrten inneren Oberfläche angebracht ist.

9. lonisationsfilter nach Anspruch 8, **dadurch gekennzeichnet, dass** die rohrförmige Niederschlagselektrode als Teil des Strömungskanals in diesen einflanschbar ist.

10. Verfahren zur Verwendung des Ionisationsfilters nach einem der Ansprüche 1 bis 9, **dadurch gekennzeichnet, dass** die elektrische Spannung zwischen Sprühelektrode und Niederschlagselektrode bei oberhalb 7000 V liegt.

11. Ionisationsfilter nach einem der Ansprüche 1-9, **dadurch gekennzeichnet, dass** die Niederschlagselektrode in an sich bekannter Weise aus einem thermisch verwertbaren organischen Grundmaterial besteht, welches mit einem elektrisch leitenden organischen Material armiert ist.

12. Ionisationsfilter nach Anspruch 11, **dadurch gekennzeichnet, dass** das elektrisch leitende Material Graphit ist.

13. Ionisationsfilter nach den Ansprüchen 11 oder 12, **dadurch gekennzeichnet, dass** die Niederschlagselektrode mindestens dreilagig aufgebaut ist mit einer chemisch neutralen Lage zwischen einer stark saueren und einer stark alkalischen Lage und dass jede Lage mit Graphit armiert ist.

14. Ionisationsfilter nach einem der Ansprüche 1 bis 9 und 11 bis 13, **dadurch gekennzeichnet, dass** die Niederschlagselektrode auf jeder einer Sprühelektrode zugeordneten Seite mit einer Gitterstruktur versehen ist, wobei jede Gitterfläche mit hintereinander angeordneten sauren, neutralen und alkalisch ausgebildeten Schichten, vorzugsweise Filzschichten, bedeckt ist und wobei abwechselnd eine saure oder eine alkalische Schicht, die der Sprühelektrode zugewandte Oberfläche bildet.

15. Ionisationsfilter nach Anspruch 14, **dadurch gekennzeichnet, dass** die Gitterstruktur rechteckig, quadratisch und/oder sechseckig, vorzugsweise wabenförmig, ausgebildet ist.

16. Ionisationsfilter nach einem der Ansprüche 1 bis 9 und 11-15, **dadurch gekennzeichnet, dass** im Strömungsweg der elektrisch geladenen Schadstoffteilchen zumindest zwei denaturierend ausgebildete Niederschlagselektroden in Reihe geschaltet sind.

17. Ionisationsfilter nach Anspruch 16, **dadurch gekennzeichnet, dass** in der Sprühelektrode ein Ionenüberschuß erzeugbar ist.

18. Ionisationsfilter nach einem der Ansprüche 1-9 und 11-17, **dadurch gekennzeichnet, dass** denaturierende Schichten zusätzlich mit hygroskopisch wirkenden Substanzen getränkt oder imprägniert sind.

19. Ionisationsfilter nach einem der Ansprüche 1 bis 9 und 11-18, **dadurch gekennzeichnet,**
**dass** die denaturierenden Schichten zusätzlich mit monoklonalen Antikörpern getränkt, und/oder mit Substanzen gegen Endotoxine und/oder Substanzen gegen Pilze imprägniert sind.

20. Verfahren zur Verwendung des Ionisationsfilters nach einem der Ansprüche 1 bis 19, **dadurch gekennzeichnet, dass** Aerosol zugeführt wird.

21. Verfahren zur Verwendung des Ionisationsfilters nach Anspruch 20, **dadurch gekennzeichnet, dass** das Aerosol in einem Ultraschallzerstäuber erzeugt wird.

22. lonisationsfilter nach einem der Ansprüche 1-9, und 11-19, **dadurch gekennzeichnet, dass** direkt in die denaturierende Schicht Aktivkohle integriert ist.

## Claims

1. Ionization filter for the purification of air that is enriched with dust particles and other inorganic and organic pollutants, with at least one electrically charged emission electrode for the generation of electrically conductive particles and at least one passive electrode for the collection of pollutants that are circulated in the electrical field between the emission electrode and the passive electrode, **characterized by** another layer which is arranged in the flow path of the pollutant particles that are to be precipitated and which has a free mass transfer area for microorganisms where the microorganisms die after contact.

2. Ionization filter according to claim 1, **characterized by** the fact that the denaturing layer is strongly acidic or strongly alkaline.

3. Ionization filter according to claim 1 or claim 2, **characterized by** the fact that the denaturing layer consists of several sub-layers, with alternating strongly acidic or strongly alkaline layers, or vice versa, and with a neutral intermediate layer arranged between two layers of different pH values.

4. Ionization filter according to one of the claims 1 through 3, **characterized by** the fact that the denaturing layer is connected with the surface of the passive electrode.

5. Ionization filter according to one of the claims 1 through 4, **characterized by** the fact that the denaturing layer is integrated into the surface of the passive electrode or the entire passive electrode.

6. Ionization filter according to one of the claims 1 through 5, **characterized by** the fact that the emission electrode is a metal wire, which is equipped with extra-fine wire tips that are distributed along its entire length.

7. Ionization filter according to claim 6, **characterized by** the fact that the extra-fine wire tips are fastened to the wire within an angle range of 60° to 90° to the wire axis.

8. Ionization filter according to one of the claims 6 or 7, **characterized by** the fact that the passive electrode has the shape of a tube and that the denaturing layer is arranged on the interior surface facing the emission electrode.

9. Ionization filter according to claim 8, **characterized by** the fact that the tube-shaped passive electrode can be flanged into the flow channel and integrated with it.

10. Process for use of the ionization filter according to one of the claims 1 through 9, **characterized by** the fact that the electric tension between the emission electrode and the passive electrode is higher than 7,000 V.

11. Ionization filter according to one of the claims 1 through 9, **characterized by** the fact that the passive electrode in fundamentally well-known fashion consists of an organic base material that is thermally recoverable and reinforced with an electrically conductive organic material.

12. Ionization filter according to claim 11, **characterized by** the fact that the electrically conductive material is graphite.

13. Ionization filter according to claim 11 or 12, **characterized by** the fact that the passive electrode has at least three layers, with a chemically neutral layer between a strongly acidic and a strongly alkaline layer, and that each layer is reinforced with graphite.

14. Ionization filter according to claims 1 through 9 and 11 through 13, **characterized by** the fact that the passive electrode is equipped with a mesh design on every side that faces an emission electrode, with each mesh area being covered with acidic, neutral and alkaline layers, preferably of felt, that are arranged one after the other, and with an acidic or alkaline layer alternately forming the surface that faces the emission electrode.

15. Ionization filter according to claim 14, **characterized by** the fact that the mesh design has a rectangular, square and/or hexagonal, preferably honeycomb, shape.

16. Ionization filter according to one of the claims 1 through 9 and 11 through 15, **characterized by** the fact that at least two passive electrodes of denaturing properties are connected in series in the flow path of the electrically charged pollutants.

17. Ionization filter according to claim 16, **characterized by** the fact that an ion surplus is to generate in the emission electrode.

18. Ionization filter according to one of the claims 1 through 9 and 11 through 17, **characterized by** the fact that denaturing layers are additionally soaked or saturated with substances of hygroscopic effect.

19. Ionization filter according to one of the claims 1 through 9 and 11 through 18, **characterized by** the fact that the denaturing layers are additionally soaked with monoclonal antibodies, and/or with substances against endotoxins and/or substances against fungi.

20. Process for use of the ionization filter according to one of the claims 1 through 19, **characterized by** the fact that aerosol is fed.

21. Process for use of the ionization filter according to claim 20, **characterized by** the fact that the aerosol is generated in an ultra-sound atomizer.

22. Ionization filter according to one of the claims 1 through 9 and 11 through 19, **characterized by** the fact that activated carbon is integrated directly into the denaturing layer.

## Revendications

1. L'invention concerne des filtres d'ionisation pour l'élimination de particules de poussière et d'autres polluants anorganiques et organiques, concentrés dans l'air, à l'aide d'au moins une électrode à couronne, électriquement chargée, pour la génération de particules conductrices d'électricité et au moins une électrode collectrice pour capter les particules se trouvant dans le champ électrique entre l'électrode à couronne et l'électrode collectrice. Le filtre contient, dans le passage des particules à éliminer, une autre couche dénaturante, capable d'interagir avec des microorganismes et sur laquelle les microorganismes sont inactivés.

2. L'invention concerne des filtres d'ionisation, selon la revendication 1, **caractérisés par** une surface dénaturante, fortement acide ou alcaline.

3. L'invention concerne des filtres d'ionisation, selon les revendications 1 ou 2, **caractérisés par** une surface dénaturante, constituée de plusieurs couches fortement acides ou fortement alcalines, séparées d'une couche d'un pH neutre, ou bien constituée de couches alternées, fortement acides et fortement alcalines, séparées d'une couche d'un pH neutre.

4. L'invention concerne des filtres d'ionisation, selon les revendications 1 à 3, **caractérisés par le fait que** la surface dénaturante est liée à la surface de l'électrode collectrice.

5. L'invention concerne des filtres d'ionisation, selon les revendications 1 à 4, **caractérisés par le fait que** la surface dénaturante est intégrée dans la surface de l'électrode collectrice, ou que la surface dénaturante est intégrée dans la totalité de l'électrode collectrice.

6. L'invention concerne des filtres d'ionisation, selon les revendications 1 à 5, **caractérisés par le fait que** l'électrode à couronne consiste en un fil métallique, sur la longueur duquel des pointes de fil métallique fin sont fixées.

7. L'invention concerne des filtres d'ionisation, selon la revendication 6, **caractérisés par le fait que** les pointes de fil métallique fin forment un angle de 60 à 90° avec l'axe du fil métallique sur lequel les pointes sont fixées.

8. L'invention concerne des filtres d'ionisation, selon les revendications 6 ou 7, **caractérisés par le fait que** l'électrode collectrice a la forme d'un tube et que la surface dénaturante se trouve sur la surface intérieure de l'électrode collectrice, surface qui est orientée vers l'électrode à couronne.

9. L'invention concerne des filtres d'ionisation, selon la revendication 8, **caractérisés par le fait que** l'électrode collectrice en forme de tube peut être branchée dans le passage des particules de poussière.

10. L'invention concerne l'utilisation du filtre d'ionisation selon une des revendications 1 à 9, **caractérisé par le fait que** la tension électrique entre l'électrode à couronne et l'électrode collectrice est de 7000 V ou plus.

11. L'invention concerne des filtres d'ionisation, selon les revendications 1 à 9, **caractérisés par le fait que** l'électrode collectrice est composée d'un matériel de base organique combustible, armé d'un conducteur électrique, composé d'un matériel organique.

12. L'invention concerne des filtres d'ionisation, selon la revendication 11, **caractérisés par le fait que** la matière conductrice d'électricité est le graphite.

13. L'invention concerne des filtres d'ionisation, selon les revendications 11 ou 12, **caractérisés par le fait que** l'électrode collectrice est composée d'au moins trois couches, avec une couche chimiquement neutre entre une couche fortement acide et une couche fortement alcaline, et que chaque couche est armée de graphite.

14. L'invention concerne des filtres d' ionisation, selon les revendications 1 à 9 et 11 à 13, **caractérisés par le fait que** l'électrode collectrice porte de chaque côté orienté vers l'électrode à couronne une structure grillagée: chaque surface grillagée est couverte de couches acides, neutres et alcalines, de préférence de couches de feutre, se succédant; en outre, la surface orientée vers l'électrode à couronne est composée de couches acides et alcalines, alternées.

15. L'invention concerne des filtres d'ionisation, selon la revendication 14, **caractérisés par le fait que** la structure grillagée est rectangulaire, carrée et/ou hexagonale, de préférence alvéolaire.

16. L' invention concerne des filtres d'ionisation, selon les revendications 1 à 9 et 11 à 15, **caractérisés par le fait que** dans le passage de particules de poussière et d'autres polluants organiques et anorganiques électriquement chargés, au moins deux électrodes collectrices de nature dénaturante sont connectées en série.

17. L'invention concerne des filtres d' ionisation, selon la revendication 16, **caractérisés par le fait qu'**un surplus d'ions peut être généré dans l'électrode à couronne.

18. L'invention concerne des filtres d'ionisation, selon les revendications 1 à 9 et 11 à 17, **caractérisés par le fait que** des surfaces dénaturantes sont en plus imbibées ou imprégnées de substances hygroscopiques.

19. L'invention concerne des filtres d'ionisation, selon les revendications 1 à 9 et 11 à 18, **caractérisés par le fait que** les surfaces dénaturantes sont en plus imbibées d'anticorps monoclonaux et/ou imprégnées de substances agissantes contre des endotoxines et/ou des moisissures.

20. L' invention concerne l'utilisation du filtre d' ionisation, selon une des revendications 1 à 19, **caractérisé par le fait qu'**un aérosol est introduit dans le système.

21. L'invention concerne l'utilisation du filtre d' ionisation, selon la revendication 20, **caractérisé par le fait que** l'aérosol est généré par un générateur d'aérosol à ultrasons.

22. L'invention concerne des filtres d'ionisation, selon les revendications 1 à 9 et 11 à 19, **caractérisés par le fait que** du charbon actif est intégré directement dans la couche dénaturante.
